# EUROPÄISCHE PATENTSCHRIFT

(11) **EP 0 650 863 B1**
(45) Veröffentlichungstag und Bekanntmachung des Hinweises auf die Patenterteilung: **01.10.1997**
(21) Anmeldenummer: 93117082.3
(22) Anmeldetag: 21.10.1993
(51) Int. Cl.: B60M 1/20, B60M 7/00

(54) **Fahrleitungsstützpunkt**
Catenary wire support
Support de fil caténaire

(43) Veröffentlichungstag der Anmeldung: 03.05.1995
(73) Patentinhaber: SIEMENS AKTIENGESELLSCHAFT, 80333 München (DE)
(72) Erfinder: Ganshorn, Rolf-Dieter, D-68169 Mannheim (DE); Menhorn, Hermann, D-23879 Mölln (DE)

(56) Entgegenhaltungen:
- DE-A- 735 167
- DE-A- 3 809 716
- DE-U- 9 111 420

## Beschreibung

Die Erfindung bezieht sich auf einen Fahrleitungsstützpunkt gemaß Oberbegriff des Anspruchs 1.

Derartige Fahrleitungsstützpunkte sind z.B. aus der EP-B-0 111 730 bekannt. Die Fahrleitungsstützpunkte dienen hierbei dazu, einen profilierten Fahrdraht, der einen ununterbrochenen Strang bildet und als von unten bestrichene Stromschiene ausgebildet ist, in Längsrichtung unverschiebbar an einer Decke eines Bauwerks, vorzugsweise eines Tunnels, aufzuhängen. Um der Funktion einer Fahrleitung gerecht zu werden, müssen die Fahrleitungsstützpunkte mit ihrer Längsachse möglichst parallel zur Mittelsenkrechten auf die Fahrebene, das ist bei Bahnen die Ebene zwischen den Oberkanten der Schienen, ausgerichtet werden. Die Lage der Mittelsenkrechten auf die Fahrebene ist aufgrund von Gleisüberhöhungen im allgemeinen nicht lotrecht. Darüber hinaus sind bei der Montage der Fahrleitungsstützpunkte auch Toleranzen im Bauwerk sowie die Bauart der jeweiligen Anlage zu berücksichtigen. Im bekannten Fall ist die Haltesäule zum Ausgleich geringer Toleranzen sowie zur Höhenfeineinstellung im Grundkörper in ihrer Höhe verstellbar und mittels einer Stellschraube fixierbar sowie durch einen Zentrierstift in der Endlage arretierbar.

Durch die DE-C-735 167 sind einteilige und zweiteilige Fahrdrahtklemmenhalter bekannt, die an Seitenhalterrohren für Fahrleitungen elektrischer Bahnen angeordnet sind. Die einteiligen Fahrdrahtklemmenhalter können als Ganzes ihre Lage gegenüber den Seitenhalterrohren verändern, wohingegen bei den zweiteiligen Fahrdrahtklemmenhaltern der erste Teil mit den Seitenhalterrohren verbunden ist und der zweite Teil gegenüber dem ersten Teil verstellbar ist.

Aufgabe der vorliegenden Erfindung ist es, einen Fahrleitungsstützpunkt der eingangs genannten Art zu schaffen, dessen Klemme mit dem darin gehaltenen Fahrdraht bzw. der darin gehaltenen Stromschiene auf einfache Weise auf Gleisüberhöhungen ausrichtbar ist.

Die Aufgabe wird erfindungsgemäß durch die im kennzeichnenden Teil von Anspruch 1 angegebenen Merkmale gelöst. Vorteilhafte Ausgestaltungen der Erfindung sind in den Ansprüchen 2 bis 13 angegeben.

Der erfindungsgemäße Fahrleitungsstützpunkt besteht aus einem Grundkörper, der an der Decke eines Bauwerks, z.B. Tunnel, montiert wird. Im Grundkörper ist eine Haltesäule einseitig gehaltert. Die Haltesäule besteht im wesentlichen aus einem Rohr für die Halterung eines Isolators, an dem eine Fahrdraht- bzw. Stromschienenklemme befestigt ist. Der Grundkörper weist an seiner der Decke des Bauwerks zugewandten Fläche wenigstens eine gewölbte Abrollfläche auf. Die Wölbung der Abrollfläche erstreckt sich parallel zur Ebene, die von der Längsachse der Haltesäule und der Mittelsenkrechten der Fahrebene gebildet wird, wodurch die Fahrdraht- bzw. Stromschienenklemme in dieser Ebene in ihrer Neigung festlegbar ist. Damit ist bei einem Fahrleitungsstützpunkt nach Anspruch 1 die Lage des Fahrdrahtes bzw. der Stromschiene auf einfache Weise an die auftretenden Gleisüberhöhungen anpaßbar. Dadurch wird das insbesondere bei sinusförmig geführten Stromschienen erforderliche waagrechte Befahren durch den Pantographen sichergestellt.

Bei einem Fahrleitungsstützpunkt gemäß Anspruch 1 erfolgt die Neigungsverstellung zwischen Grundkörper und Decke des Bauwerks, bezogen auf die Fahrdraht- bzw. Stromschienenklemme also am höchstmöglichen Punkt. Der mögliche, auf einem Kreisbogen liegende Verstellbereich für die Fahrdraht- bzw. Stromschienenklemme ist damit maximal. Bei dem erfindungsgemäßen Fahrleitungsstützpunkt liegt unabhängig von der gewählten Neigungseinstellung immer ein gestreckter Hebelarm vor. Durch die gewölbte Abrollfläche des Grundkörpers ist der erfindungsgemäße Fahrleitungsstützpunkt besonders einfach im Rundtunnel einbaubar.

Bei einer Ausgestaltung des Fahrleitungsstützpunktes nach Anspruch 3 wird auf besonders einfache Weise eine Seitenverschiebbarkeit des Grundkörpers und damit der Fahrdrahtklemme erreicht.

Bei einer Ausführungsform gemäß Anspruch 8 werden die beim Befahren des Gleises auftretenden Schwingungen in der Haltesäule weitestgehend gedämpft, so daß keine gefährlichen Schwingungen auf das Bauwerk übertragen werden. Gleichzeitig werden die vom Stromabnehmer ausgehenden harten Schläge durch die Dämpfungseinrichtung gedämpft und weitestgehend absorbiert. Durch die Dämpfung der auftretenden Schwingungen und Stöße werden entsprechende Gegenresonanzen des Systems Fahrleitung-Gebäude sowie ein daraus resultierendes unerwünschtes Springen des Pantographen zuverlässig verhindert. Damit wird auch die dabei auftretende Lichtbogenbildung vermieden, so daß bei dem Fahrleitungsstützpunkt gemäß Anspruch 8 die elektrische Abtragung am Fahrdrahtspiegel, daß ist die Fläche, an welcher der Pantograph entlanggleitet, wesentlich verringert wird.

Der Fahrleitungsstützpunkt nach Anspruch 8 sowie seine Weiterbildungen nach den Ansprüchen 9 bis 13 sind für alle profilierten Fahrdrähte einsetzbar, bei denen eine Übertragung von Schwingungen, die beim Befahren des Gleises auftreten können, weitestgehend vermieden werden soll. Besonders gut sind die Fahrleitungsstützpunkte nach den Ansprüchen 5 bis 13, jedoch für Fahrdrähte geeignet, die als hochkant angeordnete Stromschienen (z.B. U-Bahn-Oberleitungen) ausgebildet und an der Decke eines Bauwerks (z.B. Tunnel) befestigt sind.

Weitere Vorteile und Einzelheiten der Erfindung ergeben sich aus der nachfolgenden Beschreibung von zwei Ausführungsbeispielen anhand der Zeichnung und in Verbindung mit den Ansprüchen 2 bis 13. Es zeigen:
- FIG 1: einen an der Decke eines Bauwerks montierten Grundkörper des erfindungsgemäßen Fahrleitungsstützpunktes,
- FIG 2: eine Draufsicht auf die der Decke des Bauwerks zugewandten Fläche des Grundkörpers gemäß FIG 1,
- FIG 3: eine erste Ausführungsform der Haltesäule des erfindungsgemäßen Fahrleitungsstützpunktes,
- FIG 4: eine zweite Ausführungsform der Haltesäule des erfindungsgemäßen Fahrleitungsstützpunktes.

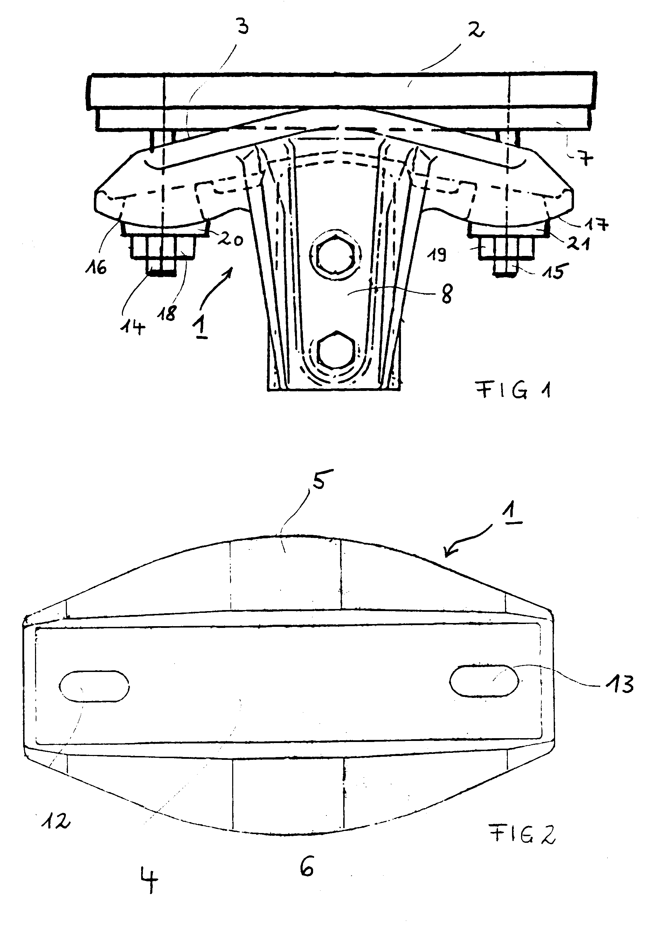

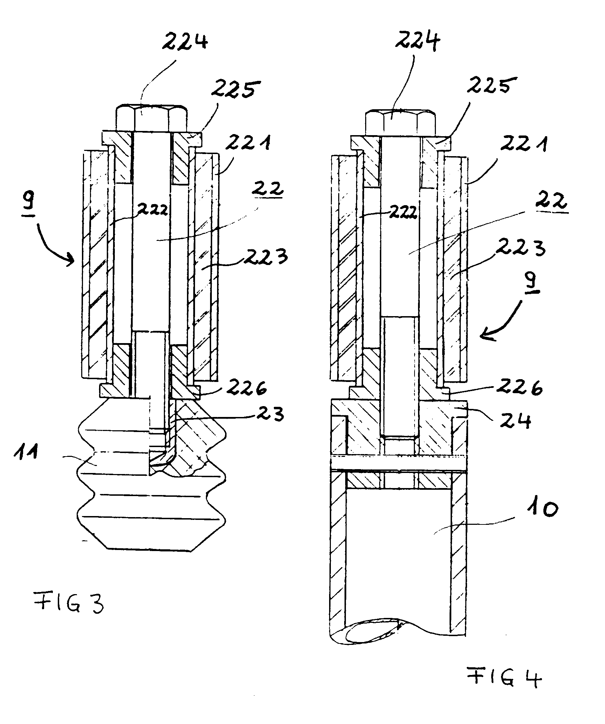

In FIG 1 und 2 ist mit 1 ein Grundkörper bezeichnet, der an einer Decke 2 eines Bauwerks (z.B. Tunneldecke) befestigt ist (FIG 1). Die der Tunneldecke 2 zugewandte Fläche 3 weist eine Nut 4 auf. Zu beiden Seiten der Nut 4 verlaufen zwei gleich ausgebildete Abrollfächen 5 und 6, die symmetrisch zur Nut 4 angeordnet sind (FIG 2). Die Nut 4 dient zur Aufnahme einer an der Tunneldecke 2 befestigten Führungs-Halteschiene 7.

Der Grundkörper 1 weist ein rohrförmiges Halteteil 8 auf, in dem eine Haltesäule 9, die z.B. gemäß den Ausführungsbeispielen in den FIG 3 und 4 ausgebildet sein kann, einseitig gehaltert ist.

Die Haltesäule 9 besteht im wesentlichen aus einem Rohr 10 für die Halterung eines Isolators 11. An dem freien Ende des Isolators 11 ist in bekannter Weise eine in den FIG 3 und 4 nicht dargestellte Fahrleitungsklemme befestigt.

Die Abrollfächen 5 und 6 des Grundkörpers 1 sind derart ballig ausgebildet, daß die Fahrdrahtklemme in der Ebene, die von der Längsachse der Haltesäule 9 und der Mittelsenkrechten der Fahrebene gebildet wird, in ihrer Neigung festlegbar ist.

Der Grundkörper 1 weist beidseitig zur Fahrdrahtklemme jeweils ein Langloch 12 bzw.13 auf, die beide parallel zur Nut 4 verlaufen (FIG 2).

In die Langlöcher 12 und 13 ist jeweils eine in die Führungs-Halteschiene 7 einsteckbare Befestigungsschraube 14 bzw.15 (z.B. Hammerkopfschrauben) durchgeführt.

Der Grundkörper 1 weist im Bereich der Langlöcher 12 und 13 an seinen Unterseiten radiale, konvexe Gleitflächen 16 und 17 auf. Auf diesen Gleitflächen 16 und 17 liegen Ausgleichsscheiben 20 und 21 auf, deren konkave Gleitflächen den gleichen Radius wie die Gleitflächen 16 und 17 am Grundkörper 1 aufweisen. Die Gegenseiten der Ausgleichsscheiben 20 und 21 sind plan. Der Radius der Gleitflächen 16 und 17 ist auf den Abrollradius der Abrollfächen 5 und 6 derart abgestimmt, daß bei einer beliebigen Neigungsverstellung des Grundkörpers 1 die Planflächen der Ausgleichsscheiben immer parallel zu den Auflageflächen der Haltemuttern 18 und 19 liegen.

Die Festlegung der Haltesäule 9 und damit der Fahrdrahtklemme in ihrer Neigung ist bei dem in FIG 1 dargestellten Grundkörper 1 besonders einfach. Nach dem Einführen und sichern der Befestigungsschrauben 14 und 15 in der Führungs-Halteschiene 7 wird der Grundkörper 1 mit seinen Langlöchern 12 und 13 auf die Befestigungsschrauben 14 und 15 aufgesteckt und mittels der Haltemuttern 18 und 19 gesichert, wobei vor dem Aufschrauben der Haltemuttern 18 und 19 die Ausgleichsscheiben 20 und 21 auf die Befestigungsschrauben 14 und 15 aufzustecken sind.

Ein unterschiedliches Festziehen der Haltemuttern 18 und 19 führt zu einem Abrollen des Grundkörpers 1 an der Tunneldecke 2. Dadurch wird der Grundkörper 1 in seiner Neigung festgelegt. Die Befestigungsschrauben 14 und 15 behalten hierbei ihre senkrechte Lage zur Tunneldecke 2 bzw. zur Führungs-Halteschiene 7 bei.

Bei den in FIG 3 und 4 dargestellten Ausführungsbeispielen einer Haltesäule 9 dient als Dämpfungseinrichtung eine Metallgummibuchse 22 (Megibuchse). Gemäß der in FIG 3 gezeigten Ausgestaltung ist das Rohr 10 der Haltesäule 9 als Megibuchse 22 ausgebildet, wohingegen bei der Ausführungsform nach FIG 4 die Megibuchse 22 oberhalb des Rohres 10 angeordnet ist. In beiden Fällen ist das freie Ende der Megibuchse 22 im Grundkörper 1 gehalten.

Die Megibuchse 22 besteht aus einem äußeren Rohr 221 und einem inneren Rohr 222 sowie einer dazwischenliegenden Gummischicht 223. Das innere Rohr 222 ist als Hohlrohr ausgebildet, auf dessen beiden Enden jeweils eine Bundbuchse 225 bzw.226 aufgesteckt ist. Die auf dem oberen Ende aufgesteckte Bundbuchse 225 und die auf das untere Ende aufgesteckte Bundbuchse 226 weisen jeweils eine Durchgangsbohrung auf, in welche der Gewindestift einer Verbindungsschraube 224 nach unten überstehend eingesteckt ist.

Die nach unten überstehende Verbindungsschraube 224 ist in dem in FIG 3 dargestellten Beispiel in eine Gewindebohrung einer Armatur 23 des Isolators 11 eingeschraubt. Es ist jedoch auch möglich, den nach unten überstehenden Teil der Verbindungsschraube 224 direkt in eine Gewindebohrung einer das Rohr 10 abschließenden Bundbuchse 24 einzuschrauben (FIG 4). Der Isolator 11 ist dann mittels einer weiteren Verbindungsschraube und einer weiteren Bundbuchse an dem noch freien Ende des Rohres 10 auf die vorstehend beschriebene Art zu befestigen (in FIG 4 nicht dargestellt).

In beiden Fällen werden die auftretenden Schwingungen und Stöße durch die Bundbuchse 226 auf das innere Rohr 222 übertragen. Die auf das innere Rohr 222 wirkenden Schwingungen und Stöße werden über die Gummischicht 223 gedämpft bzw. absorbiert und nur stark abgeschwächt an das äußere Rohr 221 und damit an den Grundkörper 1 weitergegeben. Die beim Befahren des Gleises auftretenden Schwingungen werden dadurch im Fahrleitungsstützpunkt weitestgehend gedämpft bzw. abgebaut, so daß keine gefährlichen Schwingungen auf die Tunneldecke 2 übertragen werden. Gleichzeitig werden durch die Absorption der Schwingungen in der Gummischicht 223 die Eigenschwingungen des Systems reduziert, wodurch die Befahrungsgüte des Fahrdrahtes bzw. der Stromschiene erhöht wird.

## Patentansprüche

1. Fahrleitungsstützpunkt, der einen an einer Decke (2) eines Bauwerks befestigbaren Grundkörper (1) und eine in diesem gehalterte Haltesäule (9) umfaßt, die im wesentlichen aus einem Rohr (10) für die Halterung eines Isolators (11) mit einer an diesem befestigten Fahrdraht- bzw. Stromschienenklemme besteht,
**dadurch gekennzeichnet**,
daß der Grundkörper (1) an seiner der Decke (2) des Bauwerks zugewandten Fläche (3) wenigstens eine sich rechtwinklig zur Fahrtrichtung erstreckende Abrollfläche (5,6) aufweist, durch die die Längsachse der Haltesäule (9) parallel zur Mittelsenkrechten der Fahrebene oder in der Mittelsenkrechten der Fahrebene festlegbar ist.

2. Fahrleitungsstützpunkt nach Anspruch 1,
**dadurch gekennzeichnet**,
daß der Grundkörper (1) ein rohrförmiges Halteteil (8) aufweist, in dem die Haltesäule (9) gehaltert ist.

3. Fahrleitungsstützpunkt nach Anspruch 1,
**dadurch gekennzeichnet**,
daß der Grundkörper (1) in seiner der Decke (2) des Bauwerks zugewandten Fläche (3) eine parallel zur Abrollrichtung verlaufende Nut (4) zur Aufnahme einer an der Decke (2) des Bauwerks befestigten Führungs-Halteschiene (7) aufweist.

4. Fahrleitungsstützpunkt nach Anspruch 3,
**dadurch gekennzeichnet**,
daß der Grundkörper (1) beidseitig zur Fahrdraht- bzw. Stromschienenklemme jeweils ein parallel zur Nut (4) verlaufendes Langloch (12,13) aufweist, in dem jeweils eine in die Führungs-Halteschiene (7) einschraubbare Befestigungsschraube (14,15) durchgeführt ist.

5. Fahrleitungsstützpunkt nach Anspruch 4,
**dadurch gekennzeichnet**,
daß der Grundkörper (1) im Bereich der Langlöcher (12,13) an seinen Unterseiten radiale, konvexe Gleitflächen (16,17) aufweist.

6. Fahrleitungsstützpunkt nach Anspruch 5,
**dadurch gekennzeichnet**,
daß auf den Gleitflächen (16,17) Ausgleichsscheiben (20,21) aufliegen, deren konkave Gleitflächen den gleichen Radius wie die Gleitflächen (16,17) aufweisen.

7. Fahrleitungsstützpunkt nach Anspruch 5,
**dadurch gekennzeichnet**,
daß der Radius der Gleitflächen (16,17) auf den Abrollradius der Abrollflächen (5,6) derart abgestimmt ist, daß die Ausgleichsscheiben (20,21) mit ihren Planflächen immer parallel zu auf den Befestigungsschrauben (14,15) aufgeschraubten Haltemuttern (18,19) liegen.

8. Fahrleitungsstützpunkt nach Anspruch 1,
**dadurch gekennzeichnet**,
daß die Haltesäule (9) wenigstens eine Dämpfungseinrichtung (22) zur Dämpfung der auf den Fahrdraht bzw. auf die Stromschiene übertragenen Schwingungen aufweist.

9. Fahrleitungsstützpunkt nach Anspruch 8,
**dadurch gekennzeichnet**,
daß die Dämpfungseinrichtung (22) oberhalb des Rohres (10) angeordnet und im Grundkörper (1) gehalten ist.

10. Fahrleitungsstützpunkt nach Anspruch 8,
**dadurch gekennzeichnet**,
daß die Dämpfungseinrichtung (22) im Rohr (10) für die Halterung des Isolators (11) angeordnet ist.

11. Fahrleitungsstützpunkt nach Anspruch 8,
**dadurch gekennzeichnet**,
daß das Rohr (10) der Haltesäule (9) als Dämpfungseinrichtung (22) ausgebildet ist.

12. Fahrleitungsstützpunkt nach einem der Ansprüche 8 bis 11,
**dadurch gekennzeichnet**,
daß die Dämpfungseinrichtung (22) als Metallgummibuchse (22) ausgebildet ist, wobei die Metallgummibuchse (22) aus einem äußeren Rohr (221) und einem inneren Rohr (222) sowie einer dazwischenliegenden, als Dämpfungselement wirkenden Gummischicht (223) besteht.

13. Fahrleitungsstützpunkt nach Anspruch 11,
**dadurch gekennzeichnet**,
daß die Dämpfungseinrichtung (22) mittels einer Verbindungsschraube (224) mit dem Isolator (11) kraftschlüssig verbunden ist.

## Claims

1. Catenary support, which comprises a basic body (1) fastenable to the roof (2) of a structure and a supporting column (9), which is held in said basic body and substantially comprises a tube (10) for holding an insulator (11), to which a contact wire or contact rail terminal is fastened,
characterized in
that the basic body (1) at its surface (3) directed towards the roof (2) of the structure has at least one rolling surface (5, 6), which extends at right angles to the direction of travel and by means of which the longitudinal axis of the supporting column (9) is fixable parallel to the mid-perpendicular of the travelling plane or in the mid-perpendicular of the travelling plane.

2. Catenary support according to claim 1,
characterized in
that the basic body (1) comprises a tubular holding part (8), in which the supporting column (9) is held.

3. Catenary support according to claim 1,
characterized in
that the basic body (1) in its surface (3) directed towards the roof (2) of the structure has a groove (4) extending parallel to the rolling direction for receiving a guiding retention rail (7), which is fastened to the roof (2) of the structure.

4. Catenary support according to claim 3,
characterized in
that the basic body (1) on either side of the contact line or contact wire terminal has an oblong hole (12, 13), which extends parallel to the groove (4) and through which in each case a fastening screw (14, 15) screwable into the guiding retention rail (7) is passed.

5. Catenary support according to claim 4,
characterized in
that the basic body (1) at its underside in the region of the oblong holes (12, 13) has radial, convex sliding surfaces (16, 17).

6. Catenary support according to claim 5,
characterized in
that resting on the sliding surfaces (16, 17) are compensating discs (20, 21), the concave sliding surfaces of which have the same radius as the sliding surfaces (16, 17).

7. Catenary support according to claim 5,
characterized in
that the radius of the sliding surfaces (16, 17) is adapted to the rolling radius of the rolling surfaces (5, 6) in such a way that the compensating discs (20, 21) always lie with their plane surfaces parallel to retaining nuts (18, 19) which are screwed onto the fastening screws (14, 15).

8. Catenary support according to claim 1,
characterized in
that the supporting column (9) comprises at least one damping device (22) for damping the vibrations transmitted to the contact wire or contact rail.

9. Catenary support according to claim 8,
characterized in
that the damping device (22) is disposed above the tube (10) and held in the basic body (1).

10. Catenary support according to claim 8,
characterized in
that the damping device (22) is disposed in the tube (10) for holding the insulator (11).

11. Catenary support according to claim 8,
characterized in
that the tube (10) of the supporting column (9) takes the form of a damping device (22).

12. Catenary support according to one of claims 8 to 11,
characterized in
that the damping device (22) takes the form of a metal/rubber bush (22), the metal/rubber bush (22) comprising an outer tube (221) and an inner tube (222) as well as an interlying rubber layer (223) which acts as a damping element.

13. Catenary support according to claim 11,
characterized in
that the damping device (22) is frictionally connected by means of a connection screw (224) to the insulator (11).

## Revendications

1. Support de caténaire qui comprend une embase (1) pouvant être fixée sur le plafond (2) d'un édifice et une colonne (9) de support, qui est fixée dans l'embase et qui est formée pour l'essentiel d'un tube (10) destiné à loger un isolateur (11) sur lequel est fixé une pince de fil de contact ou de rail conducteur,
caractérisé en ce
que l'embase (1) comporte, sur sa face (3) tournée vers le plafond (2) de l'édifice, au moins une surface (5, 6) de roulement qui s'étend perpendi-culairement à la direction de déplacement et par l'intermédiaire de laquelle l'axe longitudinal de la colonne (9) de support peut être fixé parallèlement à la médiatrice du plan de déplacement ou sur la médiatrice du plan de déplacement.

2. Support de caténaire selon la revendication 1,
caractérisé en ce
que l'embase (1) comporte une pièce (8) de support tubulaire dans laquelle est fixée la colonne (9) de support.

3. Support de caténaire selon la revendication 1,
caractérisé en ce
que l'embase (1) comporte dans sa face (3) tournée vers le plafond (2) de l'édifice, une rainure (4) qui s'étend parallèlement à la direction de roulement et qui sert à loger un rail (7) de guidage et de support fixé sur le plafond (2) de l'édifice.

4. Support de caténaire selon la revendication 3,
caractérisé en ce
que l'embase (1) comporte, sur chacun des deux côtés de la pince de fil de contact ou de rail conducteur, un trou (12, 13) oblong qui s'étend parallèlement à la rainure (4) et dans lequel est introduite respectivement une vis (14, 15) de fixation vissée dans le rail (7) de guidage et de support.

5. Support de caténaire selon la revendication 4,
caractérisé en ce
que dans la région des trous (12, 13) oblongs, l'embase (1) comporte, sur ses côtés inférieurs, des surfaces (16, 17) de glissement radiales convexes.

6. Support de caténaire selon la revendication 5,
caractérisé en ce
que des plaques (20, 21) de compensation dont les surfaces de glissement concaves ont le même rayon que les surfaces (16, 17) de glissement, sont en appui sur lesdites surfaces (16, 17) de glissement.

7. Support de caténaire selon la revendication 5,
caractérisé en ce
que le rayon des surfaces (16, 17) de glissement est ajusté sur le rayon de roulement des surfaces (5, 6) de roulement de manière à ce que les surfaces planes des plaques (20, 21) de compensation soient toujours parallèles aux écrous (18, 19) de maintien vissés sur les vis (14, 15) de fixation.

8. Support de caténaire selon la revendication 1,
caractérisé en ce
que la colonne (9) de support comporte au moins un dispositif (22) amortisseur pour amortir les vibrations transmises au fil de contact ou au le rail conducteur.

9. Support de caténaire selon la revendication 8,
caractérisé en ce
que le dispositif (22) amortisseur est disposé au-dessus du tube (10) et est maintenu dans l'embase (1).

10. Support de caténaire selon la revendication 8,
caractérisé en ce
que le dispositif (22) amortisseur est disposé dans le tube (10) logeant l'isolateur (11).

11. Support de caténaire selon la revendication 8,
caractérisé en ce
que le tube (10) de la colonne (9) de support est réalisé sous forme de dispositif (22) amortisseur.

12. Support de caténaire selon l'une des revendications 8 à 11,
caractérisé en ce
que le dispositif (22) amortisseur est réalisé sous la forme d'un manchon (22) métal-caoutchouc, le manchon (22) métal-caoutchouc étant constitué d'un tube (221) extérieur et d'un tube (222) intérieur ainsi que d'une couche (223) intermédiaire en caoutchouc servant d'élément amortisseur.

13. Support de caténaire selon la revendication 11,
caractérisé en ce
que le dispositif (22) amortisseur est relié par application de force à l'isolateur (11) au moyen d'une vis (224) d'assemblage.
